# EUROPÄISCHE PATENTSCHRIFT

(11) **EP 2 363 050 B1**
(45) Veröffentlichungstag und Bekanntmachung des Hinweises auf die Patenterteilung: **16.10.2013**
(21) Anmeldenummer: 11001753.0
(22) Anmeldetag: 03.03.2011
(51) Int. Cl.: A47J 31/36

(54) **Kaffeemaschine sowie Verfahren zum Betreiben derselben**
Coffee machine and method for operating the same
Machine à café et procédé de fonctionnement de celle-ci

(30) Priorität: 05.03.2010 DE 102010010515
(43) Veröffentlichungstag der Anmeldung: 07.09.2011
(73) Patentinhaber: Kaffee Partner Service GmbH, 49134 Wallenhorst (DE)
(72) Erfinder: Krämer, Torsten, 32120 Hiddenhausen (DE)
(74) Vertreter: Aulich, Martin

(56) Entgegenhaltungen:
- EP-A1- 1 308 115
- EP-A1- 1 440 645
- EP-A1- 2 127 571
- EP-A2- 0 073 496
- EP-A2- 1 902 653
- US-A- 4 583 449

## Beschreibung

Die vorliegende Erfindung betrifft ein Verfahren zum Betreiben einer Kaffeemaschine, gemäß Anspruch 1 sowie eine Kaffeemaschine gemäß Anspruch 4.

Derartige Kaffeemaschinen, bei denen heißes Wasser unter Druck durch das aufzubrühende Kaffeemehl gefördert wird, sind im Stand der Technik gut bekannt. Es ist weiter bekannt, dass die Qualität des Kaffeegetränkes, insbesondere der Crema desselben, stark von dem Druck beeinflusst wird, unter dem das Brühwasser auf das Kaffeemehl einwirkt.

Dieser Brühdruck Ist unter anderem abhängig von dem Mahlgrad des verwendeten Kaffeemehls. Je feiner das Kaffeemehl gemahlen ist, desto stärker kann es komprimiert werden und desto höher ist der Widerstand, den es dem Brühwasser entgegensetzt. Dementsprechend steigt auch der sich im Brühraum einstellende Brühdruck.

Allerdings kann insbesondere bei Kaffeevollautomaten der Mahlgrad des verwendeten Kaffeemehls nicht beliebig fein eingestellt werden. Denn anderenfalls setzen sich verschiedene Bauteile der Maschine mit dem Kaffeemehl zu.

Aus diesem Grund Ist es bekannt, den Brühdruck auf andere Weise zu erhöhen, nämlich durch den Einsatz sogenannter Cremaventile. Beispielsweise aus der EP 0 756 842 B1 ist ein den Brühraum stromabwärts zunächst verschließendes Cremaventil bekannt. Sobald das Brühwasser einen vorgegebenen Soll-Öffnungsdrucks erreicht, öffnet das Cremaventil selbsttätig, sodass das fertige Kaffeegetränk aus dem Brühraum ausströmen kann.

Nachteilig bei den Kaffeemaschinen des Standes der Technik ist, dass bei Zubereitung verschiedener Kaffeegetränkarten der jeweilige Brühdruck, bei dem das Cremaventil selbsttätig öffnet, immer ein Kompromiss ist. Der vorgegebene Brühdruck ist bestenfalls für eine der verwendeten Kaffeemehlarten bzw. für eine der zubereitbaren Kaffeegetränkearten der jeweiligen Maschine optimal. Bei den anderen Kaffeegetränkarten dagegen ist dies nicht der Fall.

Die EP 2 127 571 zeigt eine Kaffeemaschine mit der zwei Kaffeegetränkarten, die unterschiedliche Brühdrücke benötigen, hergestellt werden können. Es wird vorgeschlagen, zwei Brühkammern einzusetzen, wobei eine Brühkammer für einen ersten Brühdruck ausgelegt ist, eine andere Brühkammer für einen zweiten Brühdruck. Es ist weiter offenbart, anstelle von zwei Brühkammern nur eine Brühkammer zu verwenden. Hierfür muss ein Ausgangsventil so gesteuert werden, dass wahlweise ein Brühvorgang bei einem niedrigeren Druck oder einem hohen Druck durchgeführt werden kann.

Ausgehend von dem eingangs beschriebenen Stand der Technik ist es Aufgabe der vorliegenden Erfindung, ein Verfahren zum Betreiben einer Kaffeemaschine, insbesondere eines Kaffeevollautomaten, anzugeben, mit dem auch bei Verwendung unterschiedlicher Kaffeemehlarten Kaffeegetränke bestmöglicher Qualität zubereitbar sind. Des Weiteren ist es Aufgabe der vorliegenden Erfindung, eine Kaffeemaschine anzugeben, die mit einem solchen Verfahren betrieben werden kann.

Diese Aufgabe wird gelöst durch ein Verfahren zum Betreiben einer Kaffeemaschine gemäß Anspruch 1 sowie eine Kaffeemaschine gemäß Anspruch 4.

Demnach wird ein Verfahren zum Betreiben einer Kaffeemaschine angegeben, insbesondere eines Kaffeevollautomaten, bei dem von einem Benutzer mindestens zwei Arten von Kaffeegetränken an dem Kaffeeautomaten auswählbar sind, die anschließend von der Maschine produziert werden, wobei in einen stromabwärts verschließbaren Brühraum der Maschine unter Druck stehendes Brühwasser eingeleitet wird, das dort vorhandenes Kaffeemehl durchfeuchtet, und wobei das Brühwasser anschließend mindestens zum Großteil erst bei Erreichen oder Überschreiten eines vorbestimmten Druckes aus dem Brühraum geleitet wird. Bei einer ersten Kaffeegetränkart, die die Kaffeemaschine nach erfolgter Auswahl durch den Benutzer zubereitet, tritt das Brühwasser bei einem geringeren Druck aus dem Brühraum aus als bei einer zweiten Kaffeegetränkart, die die Maschine zubereitet.

Nachdem das Kaffeegetränk aus dem Brühraum ausgetreten ist, wird es letztlich - gegebenenfalls über verschiedene Zwischenleitungen - zu einer stromabwärts des Brühraums angeordneten Ausgabeleitung geleitet, über die das Getränk in der Regel in ein Getränkebehältnis, etwa einen Kaffeebecher, fließen kann.

Vorteilhafterweise kann erfindungsgemäß daher der Brühdruck in dem Brühraum automatisch abhängig von der Kalleegetränkart, die die Maschine aktuell produzieren soll, eingestellt werden. Der Brühdruck wird dementsprechend der zuzubereitenden Kaffeegetränkart individuell angepasst. Im Gegensatz dazu ist im Stand der Technik bei den verschiedenen Kaffeegetränkarten, die insbesondere ein Kaffeevollautomat zubereiten kann, der effektive Brühdruck immer derselbe, da dort das entsprechende Cremaventil immer unter demselben Brühwasserdruck öffnet.

Bevorzugt wird das Brühwasser daher etwa bei Zubereitung eines sogenannten Espressokaffees (erst) bei höherem Druck aus dem Brühraum geleitet als dies beispielsweise bei Zubereitung eines sogenannten Schwarzkaffees der Fall ist. Dementsprechend erfolgt mit anderen Worten die Durchfeuchtung des Kaffeemehls jeweils bei individuell an die Kaffeegetränkart angepassten Bruhwasserdruckwerten.

Mit der Erfindung ist es im Ergebnis möglich, bei ein und demselben Kaffeevollautomaten auch bei der Zubereitung verschiedener Kaffeegetränkarten jeweils nahezu optimale, zumindest gegenüber dem Stand der Technik deutlich verbesserte Ergebnisse zu erzielen.

Erfindungsgemäß tritt das Brühwasser bei der ersten Kaffeegetränkart aus einem ersten, den Brühraum unmittelbar oder mittelbar strömabwärts verschließenden Cremaventil aus und bei der zweiten Kaffeegetränkart aus einem zweiten, den Brühraum stromabwärts unmittelbar oder mittelbar verschließenden Cremaventil. Mit anderen Worten verfügt die entsprechende Kaffeemaschine über mindestens zwei Cremaventile. Vorzugsweise - wenngleich nicht zwingend - öffnen beide Cremaventile dabei selbsttätig. Dies geschieht bei einem vorbestimmten Soll-Öffnungsdruck, wobei der Soll-Öffnungsdruck des ersten Cremaventils dementsprechend geringer eingestellt ist als der Soll-Öffnungsdruck des zweiten Cremaventils.

Die Cremaventile sind dabei in der Regel Rückschlagventile. Diese können beispielsweise federbelastete Schließorgane aufweisen. Sie sperren den Ausfluss des Kaffegetränkes aus dem Brühraum, solange der anliegende Brühdruck die Federkraft nicht übersteigt. Sobald der Brühdruck größer ist als die Federkraft öffnet das Ventil. Die Feder ist in einem solchen Fall daher in geeigneter Weise auf den gewünschten Soll-Öffnungsdruck abgestimmt.

Die beiden Cremaventile sind erfindungsgemäß jeweils mittels einer eigenen (flüssigkeitsleitenden) Zweigleitung stromaufwärts an den eigentlichen Brühraum angeschlossen. Gegebenenfalls münden die Zweigleitungen stromaufwärts in eine gemeinsame Leitung, die wiederum zum Brühraum führt. Innerhalb dieser möglichst kurz und jeweils mit möglichst geringem Durchmesser auszubildenden Verbindungsleitungen befindet sich in diesem Fall während des Brühvorgangs bereits eine vernachlässigbare Menge Brühwasser.

Erfindungsgemäß ist in der Zweigleitung, in der das Cremaventil mit geringerem Soll-Öffnungsdruck angeschlossen ist, ein mittels Steuersignalen steuerbares Absperrventil angeordnet. Das Absperrventil kann stromabwärts des Cremaventils oder stromaufwärts angeordnet sein. Grundsätzlich ist es auch denkbar, dass das Cremaventil selbst eine zusätzliche, steuerbare Absperrfunktion aufweist.

Wenn nun an der Kaffeemaschine eine Kaffeegetränkart ausgewählt wird, bei der es notwendig ist, das Kaffeemehl bei einem Brühdruck zu durchfeuchten, der höher ist als der Soll-Öffnungsdruck des ersten Cremaventils, wird zunächst das Absperrventil automatisch von der entsprechenden Steuereinrichtung der Kaffeemaschine geschlossen. Die Zweigleitung des ersten Cremaventils ist somit gesperrt.

Sollte das Absperrventil in diesem Fall beispielsweise stromabwärts des ersten Cremaventils angeordnet sein, würde das erste Cremaventil im Verlaufe des Brühvorgangs durch den seinen Soll-Öffnungsdruck übersteigenden Brühwasserdruck zwar öffnen. Die Sperrung des Absperrventils verhindert dann aber, dass das Kaffeegetränk zur stromabwärts des Cremaventils bzw. des Absperrventils angeordneten Ausgabeleitung weiterfließen und somit im Ergebnis vollständig aus dem Brühraum austreten kann. Entsprechend kann das Kaffeegetränk nur über das zweite Cremaventll zur Ausgabeleitung gelangen, und zwar sobald der Brühwasserdruck, der an dem zweiten Cremaventil anliegt, den Soll-Öffnungsdruck desselben erreicht bzw. übersteigt.

Alternativ zu der dargestellten Lösung, mindestens zwei Cremaventile mit jeweils unterschiedlichem Soll-Öffnungsdruck einzusetzen, die bevorzugt selbsttätig öffnen, ist es auch denkbar, (mindestens) ein einzelnes Cremaventil zu verwenden, das mittels geeigneten Signalen der Steuereinrichtung der Kaffeemaschine bei unterschiedlichen Brühdrücken öffenbar ist. Mit anderen Worten wird das Cremaventil in diesem Fall abhängig von der ausgewählten Kaffeegetränkart gesteuert, nämlich derart, dass es bei der ersten Kaffeegetränkart bei geringerem Brühwasserdruck öffnet als bei der zweiten Kaffeegetränkart.

Unabhängig davon, ob ein oder mehrere Cremaventile eingesetzt werden, ist es denkbar, einen Sensor einzusetzen, der den Ist-Brühdruck des Brühwassers während des Brühprozesses misst. Der Ist-Brühdruck kann dann als Parameter in die Steuerung der Öffnung des oder der Cremaventile einfließen.

Die im Rahmen der Erfindung eingesetzten Verbindungsleitung(en) und/oder der oder die Cremaventile können theoretisch unmittelbar in entsprechenden Wandungen oder in Bauteilen einer den Brühraum begrenzenden Brühkammer angeordnet sein oder außerhalb derselben als separate Verbindungsleitungen ausgebildet sein.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus der beigefügten Zeichnung. Darin zeigt:

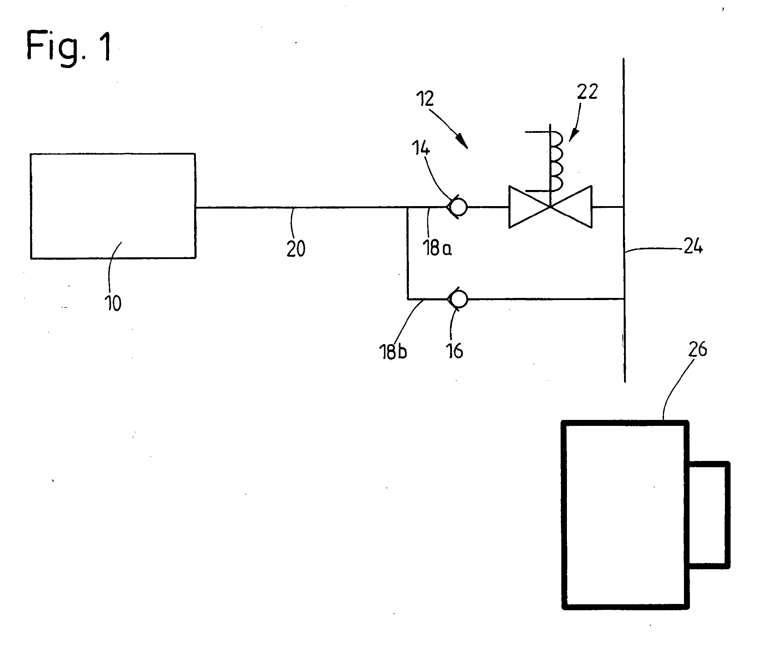

Fig. 1 eine Prinzipskizze eines Ausschnitts einer vollautomatischen Kaffeemaschine, die gemäß dem erfindungsgemäßen Verfahren arbeitet.

Die nachfolgend beschriebene Ausführungsform der Erfindung betrifft eine vollautomatische Kaffeemaschine. Derartige Kaffeemaschinen verfügen über einen sogenannten Brühraum 10 (bzw. eine Brühkammer), in dem das von einem Bediener ausgewählte Kaffeegetränk aufgebrüht wird. Zu diesem Zweck wird mittels einer nicht dargestellten Pumpe der Kaffeemaschine noch kaltes Brühwasser entlang einer geeigneten, an sich bekannten Heizeinrichtung geführt, mit der das Brühwasser auf die benötigten Temperaturen erhitzt wird.

Anschließend wird das heiße Brühwasser unter einem geeigneten Druck in den Brühraum 10 geleitet, in dem Kaffeemehl lagert. Das Kaffeemehl wird von dem unter Druck stehenden Brühwasser durchfeuchtet und so das Kaffeegetränk zubereitet und anschließend an den Bediener ausgegeben.

Sowohl die Zubereitung als auch die Ausgabe des jeweiligen Kaffeegetränks erfolgt nach vorheriger Auswahl desselben durch den Bediener vollautomatisch.

Zur Erzielung eines besonders guten Brühergebnisses wird erfindungsgemäß abhängig von der von einem Bediener ausgewählten Kaffeegetränkart innerhalb des Brühraums 10 ein jeweils unterschiedlicher Brühdruck eingestellt.

Um dies zu ermöglichen, ist vorliegend die Verwendung einer Ventileinrichtung 12 vorgesehen. Diese Ventileinrichtung 12 umfasst ein erstes Cremaventil 14, sowie ein zweites Cremaventil 16. Die beiden Cremaventile 14, 16 sind bezogen auf die Fließ- oder Förderrichtung des Brühwassers bzw. des Kaffeegetränks in der Maschine stromabwärts des Brühraums 10 angeordnet.

Dabei ist das erste Cremaventil 14 in einer Zweigleitung 18a positioniert, das zweite Cremaventil 16 in einer Zweigleitung 18b. Die Zweigleitungen 18a, 18b münden stromaufwärts in eine gemeinsame Leitung 20, die flüssigkeitsleitend mit dem Brühraum 10 in Verbindung steht. Die Cremaventile 14, 16 sind derart ausgebildet, dass sie bei unterschiedlichen Brühdrücken öffnen. Im vorliegenden Fall öffnet das erste Cremaventil 14 bei Überschreitung eines Brühdrucks von ungefähr 4 bar, das zweite Cremaventil 16 dagegen bei Überschreitung eines höheren Brühdrucks von ungefähr 9 bar.

Bei den Cremaventilen 14, 16 handelt es sich um federbelastete Rückschlagveritile. Grundsätzlich kann aber jede Art von Ventil eingesetzt werden, die die Anforderung erfüllt, bei vorgegebenen Drücken selbsttätig zu öffnen. Im Übrigen ist auch denkbar, auf die selbsttätige Öffnung zu verzichten und mittels Steuersignalen öffenbare Cremaventile einzusetzen. Der Fachmann des Standes der Technik erkennt, dass hier vielfältige Möglichkeiten denkbar sind.

Stromabwärts des ersten Cremaventils 14 ist in der Zweigleitung 18a ein steuerbares Absperrventil 22 der Ventileinrichtung 12 angeordnet.

Beide Zweigleitungen 18a, 18b münden stromabwärts schließlich in eine gemeinsame Ausgabeleitung 24 der Kaffeemaschine. Über die Ausgabeleitung 24 kann das fertige Kaffeegetränk in diesem Ausführungsbeispiel in eine unter der Ausgabeleitung 24 angeordnete Kaffeetasse 26 fließen.

Nachfolgend wird die erfindungsgemäße Funktionsweise der auf diese Weise spezifizierten Kaffeemaschine zusammenhängend dargestellt:

An der Kaffeemaschine sind von einem Bediener zunächst in an sich bekannter Weise verschiedene Kaffeegetränkarten auswählbar. Insbesondere kann ein sogenanntes Espressokaffeegetränk ausgewählt werden oder ein Schwarzkaffeegetränk.

Falls der Bediener im vorliegenden Ausführungsbeispiel ein Schwarzkaffeegetränk auswählt, registriert dies die Steuereinrichtung der Kaffeemaschine. Insoweit dies noch nicht geschehen ist, sorgt die Steuereinrichtung der Kaffeemaschine dafür, dass das Absperrt ventil 22 geöffnet wird. Anschließend wird das heiße Brühwasser unter Druck in den Brühraum 10 gepumpt, in dem das Durchfeuchten des Kaffeemehls bzw. das Aufbrühen des Kaffees erfolgt.

Während des eigentlichen Brühvorgangs ist das Brühwasser bzw. das Kaffeegetränk sowohl in dem Brühraum 10 als auch in den angrenzenden Leitungen 20, 18a, 18b enthalten. An beiden Cremaventilen 14, 16 liegt der volle Brühdruck an.

Der Brühvorgang findet solange statt bzw. die Pumpe sorgt so lange für eine Erhöhung des Brühdrucks, bis ein Brühdruck von 4 bar überschritten wird. In diesem Moment öffnet das erste Cremaventil 14 selbsttätig und das aufgebrühte bzw. fertige Kaffeegetränk kann durch das erste, geöffnete Cremaventil 14, das geöffnete Absperrventil 22 sowie die Ausgabeleitung 24 in die Kaffeetasse 26 einströmen.

Sollte der Bediener alternativ an der Kaffeemaschine allerdings ein Espressogetränk auswählen, registriert die Steuereinrichtung der Kaffeemaschine dies ebenfalls. Abweichend zu dem Verfahrensablauf bei Schwarzkaffee schließt sie allerdings im nächsten Schritt - insoweit noch nicht geschehen - das steuerbare Absperrventil 22. Anschließend wird wiederum heißes Brühwasser unter Druck in den Brühraum 10 gepumpt.

Ähnlich wie bei der Schwarzkaffeevariante öffnet das erste Cremaventil 14 bei Überschreiten eines Brühdrucks von zunächst 4 bar, sodass eine geringe Menge Brühwasser bzw. Kaffeegetränk stromabwärts in Richtung des Absperrventils 22 strömt. Das in diesem Fall geschlossene Absperrventil 22 sorgt dann allerdings dafür, dass das Kaffeegetränk nicht weiter in Richtung der Ausgabeleitung 24 fließen kann und insbesondere nicht in die Kaffeetasse 26 strömen kann. Der Brühraum 10 bleibt daher in dieser Phase weiterhin stromabwärts geschlossen, sodass außer der geringen, in den Leitungen 18a, 18b und 20 enthaltenen Mengen das Kaffeegetränk nicht aus dem Brühraum 10 entweichen kann.

Vielmehr erfolgt der Brühvorgang in dem Brühraum 10, bis ein Brühdruck von 9 bar überschritten wird. Dann öffnet das zweite Cremaventil 16 und das fertige, aufbereitete Kaffeegetränk kann entlang der Zweigleitung 18b über die Ausgabeleitung 24 in die Kaffeetasse 26 strömen.

### Bezugszeichenliste:

- 10: Brühraum
- 12: Ventileinrichtung
- 14: Cremaventil
- 16: Cremaventil
- 18a: Zweigleitung
- 18b: Zweigleitung
- 20: Leitung
- 22: Absperrventil
- 24: Ausgabeleitung
- 26: Kaffeetasse

## Patentansprüche

1. Verfahren zum Betreiben einer Kaffeemaschine, insbesondere eines Kaffeevollautomaten, mit der mindestens zwei Arten von Kaffeegetränken auswählbar und zubereitbar sind, wobei in einen stromabwärts verschließbaren Brühraum (10) unter Druck stehendes Brühwasser eingeleitet wird, das dort vorhandenes Kaffeemehl durchleuchtet, und wobei das Brühwasser anschließend mindestens zum Großteil erst bei Erreichen oder Überschreiten eines vorbestimmten Drucks aus dem Brühraum austritt, wobei bei einer ersten Kaffeegetränkart, die die Maschine zubereitet, das Brühwasser bei einem geringeren Druck aus dem Brühraum austritt als bei einer zweiten Kaffeegetränkart, die die Maschine zubereitet, **dadurch gekennzeichnet, dass** das Brühwasser bei der ersten Kaffeegetränkart aus einem ersten, den Brühraum (10) stromabwärts verschließenden Cremaventil (14) austritt und bei der zweiten Kaffeegetränkart aus einem zweiten, den Brühraum stromabwärts verschließenden Cremaventil (16), wobei beide Cremaventile (14,16) jeweils bei einem vorbestimmten Soll-Öffnungsdruck insbesondere selbsttätig öffnen, wobei der Soll-Öffnungsdruck des ersten Cremaventils geringer ist als der Soll-Öffnungsdruck des zweiten Cremaventils, wobei die beiden Cremaventile (14, 16) jeweils mittels einer eigenen Zweigleitung (18a, 18b) stromaufwärts an den Brühraum (10) angeschlossen sind, gegebenenfalls über eine gemeinsame Leitung (20), an die die Zweigleitungen.(18a, 18b) angrenzen, und wobei nach Auswahl der zweiten Kaffeegetränkart die Zweigleitung (18a), in der das erste Cremaventil (14) mit geringerem Soll-Öffnungsdruck angeschlossen ist, gesperrt wird.

2. Verfahren gemäß Anspruch 1, **dadurch gekennzeichnet, dass** die Sperrung der Zweigleitung (18a) mittels eines steuerbaren Absperrventil (22) erfolgt, das in der Zweigleitung (18a) des ersten Cremaventils (14) angeordnet ist, bevorzugt stromabwärts oder stromaufwärts des ersten Cremaventils (14).

3. Verfahren gemäß Anspruch 1, **dadurch gekennzeichnet, dass** das Brühwasser bei Zubereitung eines sogenannten Espressokaffees bei höherem Druck aus dem Brühraum austritt als bei Zubereitung eines sogenannten Schwarzkaffees.

4. Kaffeemaschine, mit der mindestens zwei Arten von Kaffeegetränken auswählbar und zubereitbar sind, die mit dem Verfahren gemäß Anspruch 1 betreibbar ist, mit einem Brühraum (10), in dem einströmendes, unter Druck stehendes Brühwasser darin gelagertes Kaffeemehl durchfeuchtet, und mit einer Ventileinrichtung (12), durch die das Brühwasser bei Erreichen oder Überschreiten eines vorbestimmten Drucks aus dem Brühraum (10) austritt, wobei die Ventileinrichtung (12) derart ausgebildet ist, dass bei einer ersten Kaffeegetränkart, die mit der Maschine zubereitbar ist, das Brühwasser bei einem geringeren Druck aus dem Brühraum (10) austritt ist als bei einer zweiten Kaffeegetränkart, die mit der Maschine zubereitbar ist, **dadurch gekennzeichnet, dass** die Ventileinrichtung (12) mindestens zwei den Brühraum (10) stromabwärts verschließende Cremaventile (14, 16) aufweist, die jeweils bei einem vorbestimmten Soll-Öffnungsdruck des Brühwassers insbesondere selbsttätig öffnen, wobei der vorbestimmte Soll-Öffnungsdruck des einen Cremaventils (14) abweicht von dem Soll-Öffnungsdruck des anderen Cremaventils (16), nämlich größer oder kleiner ist, und dass die beiden Cremaventile (14, 16) jeweils mittels einer eigenen Zweigleitung (18a, 18b) stromaufwärts an den Brühraum (10) angeschlossen sind, gegebenenfalls über eine gemeinsame Leitung (20), an die die Zweigleitungen (18a, 18b) angrenzen, und wobei in der Zweigleitung (18a), in der das Cremaventil (14) mit geringerem Soll-Öffnungsdruck angeschlossen ist, ein steuerbares Absperrventil (22) angeordnet ist, das nach Auswahl der zweiten Kaffeegetränkart diese Zweigleitung (18a) sperrt.

5. Kaffeemaschine gemäß Anspruch 4, dadurch gekennzeichet, dass die Kaffeemaschine einen Sensor aufweist, mit dem der Druck im Inneren des Brühraums messbar ist.

## Claims

1. Method for operating a coffee machine, in particular a fully automatic coffee machine, by way of which at least two types of coffee drinks can be selected and prepared, pressurized brewing water being introduced into a brewing chamber (10) which can be closed at the downstream end, which brewing water thoroughly wets ground coffee which is present there, and at least the majority of the brewing water subsequently exiting the brewing chamber only when a predefined pressure is reached or exceeded, the brewing water exiting the brewing chamber at a lower pressure in the case of a first coffee-drink type which the machine prepares than in the case of a second coffee-drink type which the machine prepares, **characterized in that** the brewing water exits from a first crema valve (14) which closes the brewing chamber (10) at the downstream end in the case of the first coffee-drink type and from a second crema valve (16) which closes the brewing chamber at the downstream end in the case of the second coffee-drink type, both crema valves (14, 16) opening, in particular automatically, in each case at a predefined setpoint opening pressure, the setpoint opening pressure of the first crema valve being lower than the setpoint opening pressure of the second crema valve, the two crema valves (14, 16) being connected at the upstream end to the brewing chamber (10) in each case by means of a dedicated branch line (18a, 18b), optionally via a common line (20) which is adjoined by the branch lines (18a, 18b), and the branch line (18a), in which the first crema valve (14) with a lower setpoint opening pressure is connected, being shut after selection of the second coffee-drink type.

2. Method according to Claim 1, **characterized in that** the branch line (18a) is shut by means of a controllable shut-off valve (22) which is arranged in the branch line (18a) of the first crema valve (14), preferably downstream or upstream of the first crema valve (14).

3. Method according to Claim 1, **characterized in that** the brewing water exits from the brewing chamber at a higher pressure when what is known as an espresso coffee is being prepared than when what is known as a black coffee is being prepared.

4. Coffee machine, by way of which at least two types of coffee drinks can be selected and prepared, which coffee machine can be operated by way of the method according to Claim 1, having a brewing chamber (10), in which pressurized brewing water which flows in thoroughly wets ground coffee which is stored therein, and having a valve device (12), through which the brewing water exits the brewing chamber (10) when a predefined pressure is reached or exceeded, the valve device (12) being configured in such a way that the brewing water exits the brewing chamber (10) at a lower pressure in the case of a first coffee-drink type which can be prepared by way of the machine than in the case of a second coffee-drink type which can be prepared by way of the machine, **characterized in that** the valve device (12) has at least two crema valves (14, 16) which close the brewing chamber (10) at the downstream end and open, in particular automatically, in each case at a predefined setpoint opening pressure of the brewing water, the predefined setpoint opening pressure of the one crema valve (14) differing from the setpoint opening pressure of the other crema valve (16), namely being higher or lower, and **in that** the two crema valves (14, 16) are connected to the brewing chamber (10) at the upstream end in each case by means of a dedicated branch line (18a, 18b), optionally via a common line (20) which is adjoined by the branch lines (18a, 18b), and a controllable shut-off valve (22) being arranged in the branch line (18a), in which the crema valve (14) with a lower setpoint opening pressure is connected, which shut-off valve (22) shuts the said branch line (18a) after selection of the second coffee drink type.

5. Coffee machine according to Claim 4, **characterized in that** the coffee machine has a sensor, by way of which the pressure in the interior of the brewing chamber can be measured.

## Revendications

1. Procédé de fonctionnement d'une machine à café, en particulier d'une machine à café automatique, avec laquelle au moins deux types de boissons à base de café peuvent être sélectionnées et préparées, de l'eau d'infusion sous pression étant introduite dans une chambre d'infusion (10) pouvant être fermée en aval, l'eau d'infusion mouillant la poudre de café se trouvant dans la chambre d'infusion, et l'eau d'infusion sortant ensuite hors de la chambre d'infusion au moins dans sa majeure partie après avoir atteint ou dépassé une pression prédéterminée, l'eau d'infusion sortant de la chambre d'infusion, dans le cas d'un premier type de boisson à base de café préparé par la machine, à une pression inférieure à la pression dans le cas d'un deuxième type de boisson à base de café préparé par la machine, **caractérisé en ce que** l'eau d'infusion, dans le cas du premier type de boisson à base de café, sort d'une première soupape à mousse (14) fermant la chambre d'infusion (10) en aval, et dans le cas du deuxième type de boisson à base de café, sort d'une deuxième soupape à mousse (16) formant la chambre d'infusion en aval, les deux soupapes à mousse (14, 16) s'ouvrant en particulier automatiquement à chaque fois dans le cas d'une pression d'ouverture de consigne prédéterminée, la pression d'ouverture de consigne de la première soupape à mousse étant inférieure à la pression d'ouverture de consigne de la deuxième soupape à mousse, les deux soupapes à mousse (14, 16) étant à chaque fois raccordées au moyen d'une conduite ramifiée propre (18a, 18b) en amont à la chambre d'infusion (10), éventuellement par le biais d'une conduite commune (20), à laquelle se rattachent les conduites ramifiées (18a, 18b), et après la sélection du deuxième type de boisson à base de café, la conduite ramifiée (18a), dans laquelle est raccordée la première soupape à mousse (14) avec une plus faible pression d'ouverture de consigne, est bloquée.

2. Procédé selon la revendication 1, **caractérisé en ce que** le blocage de la conduite ramifiée (18a) a lieu au moyen d'une soupape d'arrêt commandable (22) qui est disposée dans la conduite ramifiée (18a) de la première soupape à mousse (14), de préférence en aval ou en amont de la première soupape à mousse (14).

3. Procédé selon la revendication 1, **caractérisé en ce que** l'eau d'infusion, lors de la préparation d'un café dit Espresso, sort de la chambre d'infusion à une pression plus élevée que lors de la préparation d'un café dit café noir.

4. Machine à café, avec laquelle au moins deux types de boissons à base de café peuvent être sélectionnées et préparées, laquelle machine à café peut fonctionner selon le procédé selon la revendication 1, comprenant une chambre d'infusion (10) dans laquelle de l'eau d'infusion introduite et sous pression mouille la poudre de café stockée dans la chambre d'infusion, et comprenant un dispositif de soupape (12) à travers lequel l'eau d'infusion sort de la chambre d'infusion (10) après avoir atteint ou dépassé une pression prédéterminée, le dispositif de soupape (12) étant réalisé de telle sorte que dans le cas d'un premier type de boisson à base de café pouvant être préparé par la machine, l'eau d'infusion sort de la chambre d'infusion (10) à une pression inférieure à la pression dans le cas d'un deuxième type de boisson à base de café pouvant être préparé par la machine, **caractérisée en ce que** le dispositif de soupape (12) présente au moins deux soupapes à mousse (14, 16) se fermant en aval de la chambre d'infusion (10), lesquelles s'ouvrent en particulier automatiquement à chaque fois dans le cas d'une pression d'ouverture de consigne prédéterminée de l'eau d'infusion, la pression d'ouverture de consigne prédéterminée de l'une des soupapes à mousse (14) étant différente de la pression d'ouverture de consigne de l'autre soupape à mousse (16), à savoir étant supérieure ou inférieure, et **en ce que** les deux soupapes à mousse (14, 16) sont raccordées à chaque fois au moyen d'une conduite ramifiée propre (18a, 18b) en amont à la chambre d'infusion (10), éventuellement par le biais d'une conduite commune (20), à laquelle se rattachent les conduites ramifiées (18a, 18b), et une soupape d'arrêt commandable (22) étant disposée dans la conduite ramifiée (18a) dans laquelle est raccordée la soupape à mousse (14) de plus faible pression d'ouverture de consigne, laquelle soupape d'arrêt bloquant cette conduite ramifiée (18a) après la sélection du deuxième type de boisson à base de café.

5. Machine à café selon la revendication 4, **caractérisée en ce que** la machine à café présente un capteur avec lequel la pression peut être mesurée à l'intérieur de la chambre d'infusion.
